Europäisches Patentamt

European Patent Office

Office européen des brevets

(19)

(11) **EP 1 677 252 A1**

(12) **EUROPEAN PATENT APPLICATION**

(43) Date of publication:
05.07.2006 Bulletin 2006/27

(51) Int Cl.:
*G06T 9/00* (2006.01)  *H04N 7/26* (2006.01)

(21) Application number: 05300001.4

(22) Date of filing: 03.01.2005

(84) Designated Contracting States:
AT BE BG CH CY CZ DE DK EE ES FI FR GB GR HU IE IS IT LI LT LU MC NL PL PT RO SE SI SK TR
Designated Extension States:
AL BA HR LV MK YU

(71) Applicant: Thomson Licensing
92100 Boulogne-Billancourt (FR)

(72) Inventors:
• Le Meur, Olivier
  35160 Talensac (FR)

• Thoreau, Dominique
  35510 Cesson-Sevigne (FR)
• Huguenel, Lila
  35700 Rennes (FR)

(74) Representative: Hartnack, Wolfgang
Deutsche Thomson-Brandt GmbH
European Patent Operations
Karl-Wiechert-Allee 74
30625 Hannover (DE)

(54) **Method and apparatus for calculating a lambda value controlling the coding mode in a video encoder.**

(57)    In video compression it is desirable to characterise the visual content of the images prior to the encoding in order to improve the coding efficiency. This is performed by adapting the Lagrangian multiplier defining a trade-off between coding/decoding distortion and required bit rate. The source pictures are filtered in frequency domain by a contrast sensivity function. The filtered picture is subtracted from the original picture. Thereafter the corresponding difference signal is weighted by a function giving more importance to the centre of the picture. The resulting signal is used for determining the Lagrange multiplier.

**Fig.3**

EP 1 677 252 A1

## Description

The invention relates to a method and to an apparatus for automatically calculating a lamda value controlling the coding mode to be applied in a video signal encoding, wherein said lamda value defines the trade-off between coding/decoding distortion and the bit rate required for coding according to said coding mode.

Background

E.g. in the H.264 (ISO/IEC 14496-10 MPEG4 part 10, AVC) video compression it is desirable to analyse or to characterise the visual content of the images prior to the encoding. Using such a-priori information can improve the coding efficiency. For example, MPEG-7 is in the process of specifying a standard in order to describe various types of audio-visual information like cut detection and face detection.

The decision making on different (macroblock) modes in picture sequence encoding is not standardised. In A. Smolic, T. Wiegand, "Long-term Global Motion Compensation for Advanced Video Coding", Heinrich-Hertz-Institute (FHG-HHI), Proc. 10. Dortmunder Fernsehseminar, ITG/FKTG-Fachtagung, Dortmund, Germany, September 2003, the Lagrangian multiplier is adapted as follows:

$$\lambda = 0.85 \times 2^{\left(\frac{QP}{3} - 4\right)} \quad ,$$

where $QP$ is the quantisation parameter for a pixel macroblock including the macroblock overhead information (macroblock header, motion vectors, etc.).

In Fig. 1 of this patent application a corresponding evolution of the Lagrangian multiplier $\lambda$ being a function of the quantisation parameter $QP$ is depicted. As the QP increases, the algorithm prefers the mode leading to the minimum bit rate.

Invention

The invention relates to the adaptation of a particular coefficient in e.g. H.264 video compression, which coefficient is denoted 'Lagrangian multiplier'. The formula in which this coefficient is applied refers to the macroblock coding mode selection based on rate distortion:

$$J(m) \; = \; D(m) \; + \; \lambda \star R(m)$$

wherein $J$ is the coding cost for the coding mode $m$, $D$ is the distortion or reconstruction error (e.g. the sum of squared differences between the original macroblock and its coded-decoded version) computed for coding mode $m$, and $R$ is the bit rate required for coding a macroblock in mode $m$, and $\lambda$ is the Lagrangian multiplier that defines the trade-off between coding/decoding distortion and required bit rate. For a high value of $\lambda$ the influence of the bit rate is favoured against that of the distortion. For a low value of $\lambda$ the influence of the distortion is maximised, i.e. the best coding/decoding picture quality is chosen.

A problem to be solved by the invention is to adapt coefficient $\lambda$ in the most efficient way in order to achieve the best subjective picture encoding/decoding quality for a given maximum bit rate. This problem is solved by the method disclosed in claim 1. An apparatus that utilises this method is disclosed in claim 2.

The Lagrange multiplier $\lambda$ is determined based on the difference between the original input picture and a pre-processed version of the original input picture.

The determination of $\lambda$ is based on the properties of the human visual system HVS, of which two fundamental properties are taken into account in this invention. Numerous experiments have shown that humans are more sensitive to the contrast of brightness intensities (i.e. to brightness gradients) than to the absolute brightness levels in a picture. Also, humans are very sensitive to spatial frequencies. One property of the HVS that is used in the invention is the contrast sensitivity function CSF.

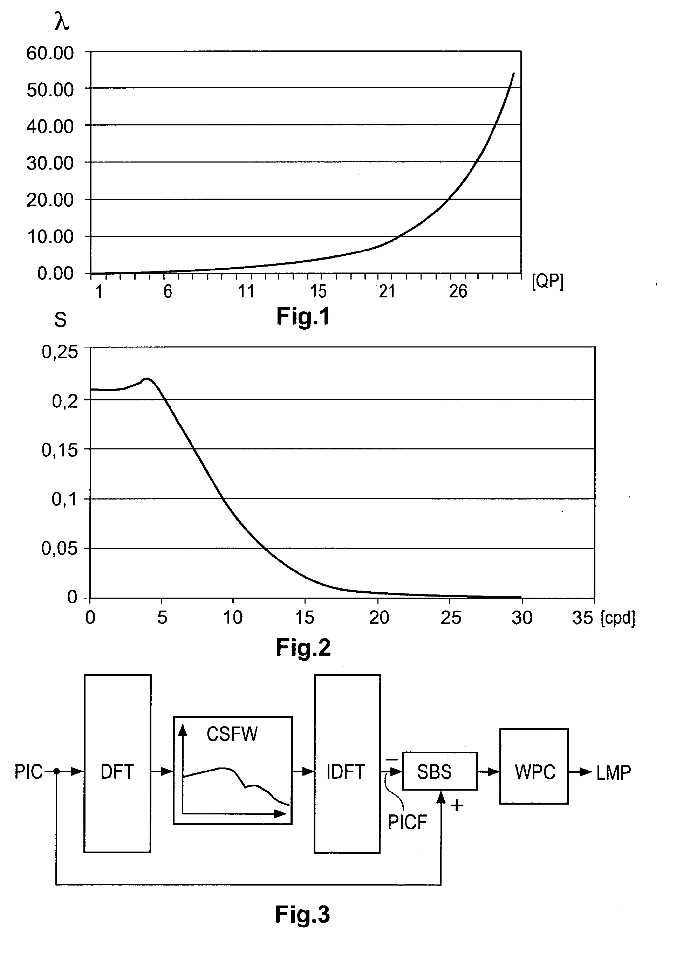

The CSF depicted in Fig. 2 shows the contrast sensivity S over the spatial frequency measured in cycles per degree. It is an example of an isotropic CSF model. The HVS is most sensitive for low spatial frequencies due to the centre/ surround organisation of the visual cells. For higher spatial frequencies the HVS sensitivity S drops rapidly. It is well-known that humans are more sensible to degradations appearing in uniform areas (which correspond to low spatial frequencies) than degradations appearing in textural or detailed areas (which correspond to high spatial frequencies).

The depicted luminance CSF function is given by:

$$S_L(f) = a_1 * f^2 * e^{(b_1 * f^{C1})} + a_2 * e^{(b_2 f^{C2})} \; ,$$

wherein $S_L$ is the luminance sensivity, f is the spatial frequency and the parameters $a_1$ to $c_2$ have the following values

| Colour space | $a_1$ | $a_2$ | $b_1$ | $b_2$ | $c_1$ | $c_2$ |
|---|---|---|---|---|---|---|
| Opponent | 0.205 | 0.949 | -0.923 | -0.8 | 0.781 | 2.000 |
| $YC_bC_r$ | 0.221 | 0.997 | -0.970 | -0.8 | 0.758 | 1.999 |
| L*a*b* | 0.220 | 0.996 | -0.969 | -0.8 | 0.760 | 1.995 |

The opponent colour space consists of three components:

- A for achromatic;
- $C_{r1}$ for red and green component;
- $C_{r2}$ for blue and yellow component.
  L*a*b* represents an attempt to linearise the perceptibility of colour differences. The non-linear relations for L*, a* and b* are intended to mimic the logarithmic response of the eye.

The second property of the HVS that is used in the invention is deduced from experiments on the direction of the human gaze. Our experiments have shown that the centre of a picture attracts the visual attention even in case that centre is devoid of interesting picture content.
According to the invention the source pictures are filtered in frequency domain by a CSF. The filtered picture is subtracted from the original picture. Thereafter the corresponding difference signal is weighted by a function giving more importance to the centre of the picture. The resulting signal is used for determining the above Lagrange multiplier λ.
In principle, the inventive method is suited for automatically calculating a lamda value controlling the coding mode to be applied in a video signal encoding, wherein said lamda value defines the trade-off between coding/decoding distortion and the bit rate required for coding according to said coding mode, including the steps:

- forming a frequency domain representation of an input picture;
- weighting said frequency domain representation of said input picture by a contrast sensivity function;
- forming a time domain representation of said weighted frequency domain representation resulting in a filtered version of said input picture;
- forming a difference signal between said input picture and said filtered input picture;
- weighting said difference signal such that to the values in the picture centre region a greater importance is assigned than to picture regions outside said centre region, by calculating for a current pixel or pixel block or macroblock location said lamda value by multiplying said difference signal with a factor that depends on the distance of said current pixel or pixel block or macroblock location from the centre of said input picture.

In principle the inventive apparatus is suited for automatically calculating a lamda value controlling the coding mode to be applied in a video signal encoding, wherein said lamda value defines the trade-off between coding/decoding distortion and the bit rate required for coding according to said coding mode, said apparatus including:

- means being adapted for forming a frequency domain representation of an input picture;
- means being adapted for weighting said frequency domain representation of said input picture by a contrast sensivity function;
- means being adapted for forming a time domain representation of said weighted frequency domain representation resulting in a filtered version of said input picture;
- means being adapted for forming a difference signal between said input picture and said filtered input picture;
- means being adapted for weighting said difference signal such that to the values in the picture centre region a greater importance is assigned than to picture regions outside said centre region, by calculating for a current pixel or pixel block or macroblock location said lamda value by multiplying said difference signal with a factor that depends on the distance of said current pixel or pixel block or macroblock location from the centre of said input picture.

Advantageous additional embodiments of the invention are disclosed in the respective dependent claims.

Drawings

Exemplary embodiments of the invention are described with reference to the accompanying drawings, which show in:

Fig. 1    evolution of the Lagrangian multiplier λ as a function of the quantisation parameter *QP*;
Fig. 2    contrast sensivity function;
Fig. 3    block diagram according to a first embodiment of the invention showing weighting of the source picture by a contrast sensitivity function using a DFT;
Fig. 4    block diagram according to a second embodiment of the invention showing weighting of the source picture by a contrast sensitivity function using a 4*4 DCT;
Fig. 5    determination of the lambda coefficient from the input and filtered input picture;
Fig. 6    normalised contrast sensivity function.

Exemplary embodiments

According to one embodiment of the invention the Lagrange multiplier is determined using a discrete Fourier transform DFT as shown in Fig. 3. The signal i(x,y) of a current input picture PIC is DFT transformed in a stage DFT resulting in a signal I(f), is weighted in a CSF weighting stage CSFW (in order to take into account the greatest sensitivity for the lowest frequencies) resulting in a signal $I_{CSF}(f)$, and is inverse DFT transformed in a stage IDFT resulting in a signal out(x,y) representing the filtered input picture PICF. In a stage SBS the input picture PIC is subtracted pixelwise from the corresponding pixels of the inverse DFT transformed version of that picture (or vice versa) and the corresponding absolute values of these pixel differences are weighted in a picture centre weighting stage WPC (in order to assign to the centre $(x_0, y_0)$ of the picture a greater importance than to the periphery) leading to a lamda map LMP ($\lambda(x,y)$) for the current picture.
This kind of processing can be expressed as follows:

$$I(f) = DFT(i(x, y))$$

$$I_{out}(f) = CSF(f) * I(f)$$

$$out(x, y) = DFT^{-1}(I_{out}(f))$$

$$\lambda(x, y) = (i(x, y) - out(x, y)) * (1 - \exp(-\frac{(x - x_0)^2 + (y - y_0)^2}{2\sigma^2})) * k$$

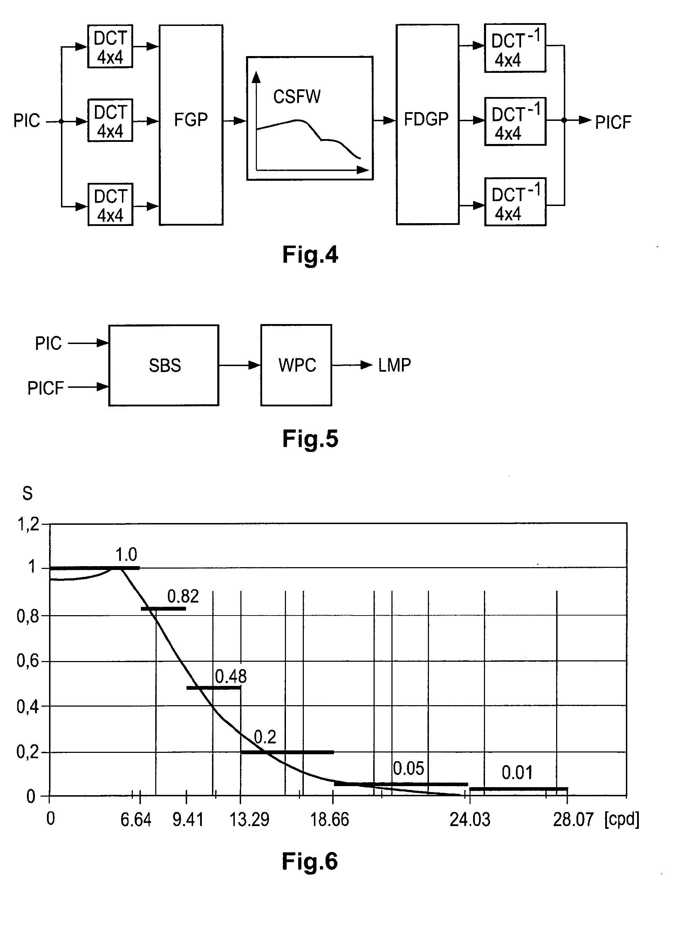

wherein x and y run over all x and y pixel positions in the picture, in the WPC weighting $x_0$ and $y_0$ refer to the centre coordinates of the picture, σ is a predetermined factor expressed in degrees and the constant k serves for adapting the strength of the coefficient so as to have the same or a similar dynamic as the above-mentioned Lagrange multiplier given by Smolic/Wiegand: $\lambda = 0.85 \times 2^{(\frac{QP}{3} - 4)}$ .
For example, a value of 2° (corresponding to 75 pixels if the picture has 720 horizontal pixels in total and 576 vertical pixels in total) can be taken for σ for a viewing distance d = 6*H.
The value of $\lambda(x, y)$ is important for coding areas of the picture. For a high value of $\lambda(x,y)$ a lower bit rate is favoured in the detriment of the coding/decoding quality. A higher video quality is preferred for the centre region of pictures, a lower video quality is accepted in the remaining areas and for borders of uniform areas.
In a second embodiment of the invention the pre-processed version PICF of the original input picture is calculated using a N*N DCT (discrete cosine transform) as shown in Fig. 4. This embodiment can be applied advantageously in picture compressions that are based on pixel block structured processing, like MPEG2 and MPEG4 Video.
Every N*N pixel block (e.g. N=4 or N=8) of the input picture PIC is DCT transformed in one or more transformer stages DCT4x4 into a corresponding N*N coefficient block. On the resulting frequency domain coefficients a frequency grouping is carried out in stage FGP. Frequency grouping consists in gathering all the DCT coefficients of a picture having the same frequency. For example, if the picture is divided into M DCT blocks (4*4), frequency grouping will provide N blocks each including M frequency coefficients having the same frequency. This is a representation of the frequencies content of a picture which is very useful for applying the CSF weighting in CSF weighting stage CSFW in order to take into account the greatest sensitivity for the lowest frequencies. Following the weighting step, a corresponding frequency de-grouping is carried out in frequency de-grouping stage FDGP in order to get N*N DCT blocks, which are thereafter inverse DCT transformed in one or more inverse transformer stages DCT$^{-1}$4x4 thereby providing the filtered input picture PICF. The processing continues like in the first embodiment by forming in stage SBS the difference signal between PIC and PICF and picture centre related weighting as shown in Fig. 5. That difference signal is used to calculate the Lamda coefficient L.

The DCT applied to N by N pixel sub-blocks is given by :

$$I(u,v) = \frac{C(v)}{2}\frac{C(u)}{2}\sum_{y=0}^{N-1}\sum_{x=0}^{N-1}i(x,y)\cos\left[(2x+1)u\pi/(2N)\right]\cos\left[(2y+1)v\pi/(2N)\right]$$

wherein

$$C(v) = \begin{cases} 1/\sqrt{2} \text{ if } v=1 \\ 1 \text{ otherwise} \end{cases} \quad, C(u) = \begin{cases} 1/\sqrt{2} \text{ if } u=1 \\ 1 \text{ otherwise} \end{cases}$$

Assuming N = 4, the following family of normalised frequencies of the frequency coefficients is obtained, i.e. for each DCT coefficient its frequency is given in table 1 (the top left position corresponds to the DC coefficient):

| 0 | 0.235 | 0.47 | 0.7 |
|-------|-------|------|-------|
| 0.235 | 0.333 | 0.52 | 0.745 |
| 0.47 | 0.52 | 0.66 | 0.85 |
| 0.7 | 0.745 | 0.85 | 1 |

The spatial sampling frequency $f_S$ expressed in pixels per degree is given by:

$$fs = \frac{2d\tan\frac{1}{2}}{W}\cdot R_h \quad,$$

wherein d is the viewing distance measured in meters, $R_h$ is the horizontal resolution of the picture and W is the width of the screen.
A simplification occurs if d = β*H with H being the height of the screen. In standard TV viewing H = W*3/4 and β = 6:

$$fs = \frac{2\beta\tan\frac{1}{2}}{4/3}\cdot R_h$$

For a horizontal resolution of 720 pixels and β = 6, the spatial sampling frequency is equal to 56.55 cpd (cycles per degree). If the signal is critically down-sampled at Nyquist rate, 0.5 cycles per pixel are obtained. The maximum frequency is then $F_{max} = f_S/2 = 28.27$ cpd. The frequency in cpd for each DCT coefficient in function of the viewing distance and the maximum frequency is therefore (the table 2 values are table 1 values multiplied by 28.27):

| 0 | 6.64 | 13.29 | 19.79 |
|---|---|---|---|
| 6.64 | 9.41 | 14.70 | 21.06 |
| 13.29 | 14.70 | 18.66 | 24.03 |
| 19.79 | 21.06 | 24.03 | 28.27 |

From the CSF and from the frequency expressed in cpd according to table 2 the below weighting coefficients, i.e. the relative sensitivity, are determined (see table 3 below). The CSF function is split into several intervals. The average value for the CSF function in each interval is computed:

$[0;6.64] \Rightarrow 1$; $[6.64;9.41] \Rightarrow 0.82$; $[9.41;13.29] \Rightarrow 0.48$; $[13.29;18.66] \Rightarrow 0.2$; $[18.66;24.03] \Rightarrow 0.05$; $[24.03;28.27] \Rightarrow 0.01$ .

| 1 | 0.82 | 0.2 | 0.05 |
|---|---|---|---|
| 0.82 | 0.48 | 0.2 | 0.05 |
| 0.2 | 0.2 | 0.05 | 0.01 |
| 0.05 | 0.05 | 0.01 | 0.01 |

In a video compression like H.264, the calculation of one lambda value $\lambda$ per macroblock (each including 16*16 luminance pixels) is required. This lambda value for a current macroblock can be calculated by forming the average of the 16 values obtained for each DCT block of that current macroblock. For a single macroblock MB the lambda value $\lambda$ is calculated like in the first embodiment:

$$\lambda(x,y) = (MB - MB_{filterd}) * (1 - \exp(-\frac{(x-x_0)^2 + (y-y_0)^2}{2\sigma^2})) * k$$

For multiple macroblocks the lambda value $\lambda$ is calculated:

$$\lambda(x,y) = (PIC - PICF) * (1 - \exp(-\frac{(x-x_0)^2 + (y-y_0)^2}{2\sigma^2})) * k$$

The invention achieves the following advantages:

- The determination of the Lagrangian multiplier is based on spatial psycho-visual properties.
- Few thresholds only are required. After the weighting matrix has been defined (cf. the above table) the processing is fully automatic.
- The invention improves the subjective quality at a given constant bit rate. Moreover, the required bit rate can be reduced for a given psycho-visual quality.

## Claims

1. Method for automatically calculating a lamda value ($\lambda$) controlling the coding mode to be applied in a video signal encoding, wherein said lamda value defines the trade-off between coding/decoding distortion and the bit rate required for coding according to said coding mode, **characterised by** the steps:

    - forming (DFT, DCT4x4) a frequency domain representation of an input picture (PIC);
    - weighting (CSFW) said frequency domain representation of said input picture by a contrast sensivity function;
    - forming (IDFT, DCT$^{-1}$4x4) a time domain representation of said weighted frequency domain representation resulting in a filtered version (PICF) of said input picture;

- forming (SBS) a difference signal between said input picture (PIC) and said filtered input picture (PICF);
- weighting (WPC) said difference signal such that to the values in the picture centre region ($x_0$, $y_0$) a greater importance is assigned than to picture regions outside said centre region, by calculating for a current pixel or pixel block or macroblock location said lamda value ($\lambda(x, y)$) by multiplying said difference signal with a factor that depends on the distance of said current pixel or pixel block or macroblock location from the centre of said input picture.

2. Apparatus for automatically calculating a lamda value ($\lambda$) controlling the coding mode to be applied in a video signal encoding, wherein said lamda value defines the trade-off between coding/decoding distortion and the bit rate required for coding according to said coding mode, said apparatus including:

- means (DFT, DCT4x4) being adapted for forming a frequency domain representation of an input picture (PIC);
- means (CSFW) being adapted for weighting said frequency domain representation of said input picture by a contrast sensivity function;
- means (IDFT, DCT$^{-1}$4x4) being adapted for forming a time domain representation of said weighted frequency domain representation resulting in a filtered version (PICF) of said input picture;
- means (SBS) being adapted for forming a difference signal between said input picture (PIC) and said filtered input picture (PICF);
- means (WPC) being adapted for weighting said difference signal such that to the values in the picture centre region ($x_0$, $y_0$) a greater importance is assigned than to picture regions outside said centre region by calculating for a current pixel or pixel block or macroblock location said lamda value ($\lambda(x, y)$) by multiplying said difference signal with a factor that depends on the distance of said current pixel or pixel block or macroblock location from the centre of said input picture.

3. Method according to claim 1, or apparatus according to claim 2, wherein said lamda value is a Lagrangian multiplier ($\lambda$).

4. Method according to claim 1 or 3, or apparatus according to claim 2 or 3, wherein said frequency domain representation is formed using a DFT and said time domain representation of said weighted frequency domain representation is formed using an IDFT.

5. Method according to claim 1 or 3, or apparatus according to claim 2 or 3, wherein said frequency domain representation is formed using a DCT and said time domain representation of said weighted frequency domain representation is formed using an IDCT.

6. Method or apparatus according to claim 5, wherein the coefficients of said DCT are frequency grouped (FGP) by gathering all the DCT coefficients of a picture having the same frequency before being weighted (CSFW) by said contrast sensivity function, and wherein the weighted frequency grouped coefficients are correspondingly degrouped (FDGP) before being inverse DCT transformed.

7. Method or apparatus according to claim 6, wherein said DCT and IDCT is a 4*4 or 8*8 DCT or IDCT, respectively.

8. Method according to one of claims 1 and 3 to 7, or apparatus according to one of claims 2 to 7, said factor being

$$(1 - \exp(-\frac{(x-x_0)^2 + (y-y_0)^2}{2\sigma^2})) \quad ,$$

wherein $x_0$ and $y_0$ are horizontal and vertical centre positions, respectively, in said input picture, x and y are any horizontal and vertical positions, respectively, in said input picture, and $\sigma$ is a predetermined factor expressed in degrees.

**Fig.1**

**Fig.2**

**Fig.3**

**Fig.4**

**Fig.5**

**Fig.6**

**European Patent Office**

## EUROPEAN SEARCH REPORT

Application Number

EP 05 30 0001

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| Y | ALBANESI M G ET AL: "Adaptive image compression based on regions of interest and a modified contrast sensitivity function" PATTERN RECOGNITION, 2000. PROCEEDINGS. 15TH INTERNATIONAL CONFERENCE ON SEPTEMBER 3-7, 2000, LOS ALAMITOS, CA, USA,IEEE COMPUT. SOC, US, vol. 3, 3 September 2000 (2000-09-03), pages 215-218, XP010533267 ISBN: 0-7695-0750-6 | 1-5 | G06T9/00 H04N7/26 |
| A | * the whole document * | 6-8 | |
| Y | NADENAU, M.J.; REICHEL, J.; KUNT, M.;: "Wavelet-based color image compression: exploiting the contrast sensitivity function" IEEE TRANSACTIONS ON IMAGE PROCESSING, vol. 12, no. 1, 2003, pages 58-70, XP002332897 Retrieved from the Internet: URL:http://ieeexplore.ieee.org/iel5/83/266 30/01187359.pdf?tp=&arnumber=1187359&isnum ber=26630> [retrieved on 2005-06-21] | 1-5 | |
| A | * page 58 - page 62 * * page 64 * | 6-8 | TECHNICAL FIELDS SEARCHED (Int.Cl.7) H04N G10L G06K |
| Y | YAN YANG ET AL: "Rate-distortion optimizations for region and object based wavelet video coding" SIGNALS, SYSTEMS AND COMPUTERS, 2000. CONFERENCE RECORD OF THE THIRTY-FOURTH ASILOMAR CONFERENCE ON OCT. 29 - NOV. 1, 2000, PISCATAWAY, NJ, USA,IEEE, vol. 2, 29 October 2000 (2000-10-29), pages 1363-1368, XP010535223 ISBN: 0-7803-6514-3 | 1-5 | |
| A | * page 1363 - page 1365 * | 6-8 | |

-/--

The present search report has been drawn up for all claims

| Place of search | Date of completion of the search | Examiner |
|---|---|---|
| Munich | 23 June 2005 | Moschetti, F |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**European Patent Office**

## EUROPEAN SEARCH REPORT

Application Number

EP 05 30 0001

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| Y | WO 97/37322 A (SARNOFF CORPORATION) 9 October 1997 (1997-10-09) | 1-5 | |
| A | * pages 4-8; figures 1-5 * | 6-8 | |
| A | ZHOU WANG, ALAN C. BOVIK , LIGANG LU, JACK L. KOULOHERIS: "Foveated wavelet image quality index" PROCEEDINGS OF SPIE, vol. 4472, 2001, pages 42-52, XP002332898 Retrieved from the Internet: URL:http://spiedl.aip.org/getpdf/servlet/G etPDFServlet?filetype=pdf&id=PSISDG0044720 00001000042000001&idtype=cvips&prog=search > [retrieved on 2005-06-21] * page 43 - page 47 * | 1-8 | |
| A | WO 99/43161 A (NDS LIMITED; WU, PING) 26 August 1999 (1999-08-26) * page 2 - page 8; figures 1-5,8,8a * | 1-8 | |
| A | YANG X K ET AL: "On incorporating just-noticeable-distortion profile into motion-compensatfd prediction for video compression" PROCEEDINGS 2003 INTERNATIONAL CONFERENCE ON IMAGE PROCESSING. ICIP-2003. BARCELONA, SPAIN, SEPT. 14 - 17, 2003, INTERNATIONAL CONFERENCE ON IMAGE PROCESSING, NEW YORK, NY : IEEE, US, vol. VOL. 2 OF 3, 14 September 2003 (2003-09-14), pages 833-836, XP010669963 ISBN: 0-7803-7750-8 * page 833 - page 834 * | | TECHNICAL FIELDS SEARCHED (Int.Cl.7) |

-/--

The present search report has been drawn up for all claims

| Place of search | Date of completion of the search | Examiner |
|---|---|---|
| Munich | 23 June 2005 | Moschetti, F |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.................................................................

& : member of the same patent family, corresponding document

EPO FORM 1503 03.82 (P04C01)

**European Patent Office**

**EUROPEAN SEARCH REPORT**

Application Number

EP 05 30 0001

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | CHUN-HSIEN CHOU, YUN-CHIN LI: "A perceptually tuned subband image coder based on the measure of just-noticeable-distortion profile" IEEE TRANSACTIONS ON CIRCUITS AND SYSTEMS FOR VIDEO TECHNOLOGY, vol. 5, no. 6, 1 December 1995 (1995-12-01), pages 467-476, XP002332899 Retrieved from the Internet: URL:http://ieeexplore.ieee.org/iel4/76/101 43/00475889.pdf?tp=&arnumber=475889&isnumb er=10143> [retrieved on 2005-06-21] * page 467 - page 471 * ----- | 1-8 | |
| | | | **TECHNICAL FIELDS SEARCHED** (Int.Cl.7) |

The present search report has been drawn up for all claims

| Place of search | Date of completion of the search | Examiner |
|---|---|---|
| Munich | 23 June 2005 | Moschetti, F |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 05 30 0001

This annex lists the patent family members relating to the patent documents cited in  the above-mentioned European search report.
The members are as contained in the European Patent Office EDP file on
The European Patent Office is in no way  liable for these particulars which are merely  given for the purpose of information.

23-06-2005

| Patent document cited in search report | | Publication date | Patent family member(s) | | Publication date |
|---|---|---|---|---|---|
| WO 9737322 | A | 09-10-1997 | EP | 0901666 A1 | 17-03-1999 |
| | | | JP | 2000506687 T | 30-05-2000 |
| | | | KR | 2000005110 A | 25-01-2000 |
| | | | WO | 9739417 A2 | 23-10-1997 |
| | | | WO | 9737322 A1 | 09-10-1997 |
| | | | US | 6529631 B1 | 04-03-2003 |
| | | | US | 6075884 A | 13-06-2000 |
| WO 9943161 | A | 26-08-1999 | AU | 2629999 A | 06-09-1999 |
| | | | WO | 9943161 A1 | 26-08-1999 |
| | | | ZA | 9801308 A | 20-08-1999 |

EPO FORM P0459

For more details about this annex : see Official Journal of the European Patent Office, No. 12/82